# EUROPEAN PATENT APPLICATION

(11) **EP 2 116 580 A1**
(43) Date of publication of application: **11.11.2009**
(21) Application number: 08711139.9
(22) Date of filing: 13.02.2008
(51) Int. Cl.: C09J 7/02, B29C 47/06, B32B 27/32, C09J 123/00, C09J 123/12

(54) **SURFACE PROTECTION SHEET**

(30) Priority: 23.02.2007 JP 2007044264
(71) Applicant: Nitto Denko Corporation, Ibaraki-shi, Osaka 567-8680 (JP)
(72) Inventor: KANADA, Mitsuhiro, Ibaraki-shi Osaka 567-8680 (JP); HAYASHI, Keiji, Ibaraki-shi Osaka 567-8680 (JP); HANAKI, Ikkou, Ibaraki-shi Osaka 567-8680 (JP); OOYAMA, Kooki, Ibaraki-shi Osaka 567-8680 (JP); YAMAMOTO, Takayuki, Ibaraki-shi Osaka 567-8680 (JP)
(74) Representative: Müller-Boré & Partner Patentanwälte
(86) International application number: PCT/JP2008/052281
(87) International publication number: WO 2008/102670

(57) **Abstract**

A surface protection sheet including a base layer and a pressure-sensitive adhesive layer which have been formed by coextrusion. The surface protection sheet has satisfactory suitability for unwinding from a roll, etc., and the pressure-sensitive adhesive layer has a smooth surface and satisfactory adhesion to rough surfaces, is free from release ingredient transfer thereto, and hence poses no problem concerning contamination. The surface protection sheet comprises: a base layer comprising a thermoplastic resin; a pressure-sensitive adhesive layer formed on one side of the base layer; and a back treatment layer formed on the other side and comprising a polyethylene resin. The surface protection sheet is **characterized in that** the base layer, pressure-sensitive adhesive layer, and back treatment layer have been integrally formed by coextrusion molding and the pressure-sensitive adhesive layer contains a noncrystalline polyolefin elastomer in an amount of 50 wt.% or larger.

## Description

### TECHNICAL FIELD

The invention relates to a surface protection sheet. For example, the surface protection sheet of the invention may be attached to the surface of members such as metal plates, coated plates, aluminum sashes, resin plates, decorated steel plates, vinyl chloride laminated steel plates, and glass plates, optical films for liquid crystal devices, such as polarizing films, optical members such as liquid crystal panels, or electronic members, to protect them, when they are transported, worked, cured, or subjected to any other process.

### BACKGROUND ART

A certain surface protection sheet includes a base sheet, a pressure-sensitive adhesive layer provided on one side of the base sheet, and a release layer that is provided on the other side of the base sheet to ensure peeling property in the process of unwinding the sheet from a roll. Not only protective performance is required of such a surface protection sheet, but also the capability of uniformly adhering to surfaces, peeling property, staining property after peeling, and so on are important for such a surface protection sheet. Staining property is particularly important in cases where the adherend is an optical member, an electronic member, a coated plate, a mirror-finished metal plate, or the like.

In related art, the release layer or the pressure-sensitive adhesive layer of a surface protection sheet for such applications is formed by applying a solution of a backside treatment agent or a pressure-sensitive adhesive in an organic solvent to a base sheet and drying the coating. Therefore, solvent-type surface protection sheets are generally used. In recent years, however, there has been an increasing demand for organic solvent-free surface protection sheets in view of environmental protection or a reduction in electronic member failures caused by out gas (organic solvent gas) from the pressure-sensitive adhesive layer or the release layer.

As an organic solvent-free technique, there is proposed a surface protection sheet formed by co-extrusion of a polyolefin-based resin base material layer and a thermoplastic pressure-sensitive adhesive resin layer (see for example Patent Literature 1). However, such a surface protection sheet consists only of a base material layer and a pressure-sensitive adhesive layer, and therefore, when it is used in the form of a roll, it has a poor unwinding capability or is sometimes impossible to unwind. In this case, therefore, the surface of the sheet may be roughened to have a reduced adhering capability to the material to be protected.

Therefore, various release treatment methods are proposed for surface protection sheets obtained by co-extrusion method. For example, a method of rubbing the backside of the base material layer with a roll, a cloth or the like is proposed (see for example Patent Literature 2). In this release treatment method, however, it is difficult to uniformly perform the rubbing process so that good peeling property cannot be obtained, and therefore, the method has the problem of an insufficient reduction in unwinding force or the like. In addition, the release effect may vary with the composition of the base material layer. In this method, an uneven surface is also formed, so that in the process of sticking the surface protective film to a polarizing film or an optical film, the irregularities of the surface protective film may be transferred to the polarizing film or the optical film, or the adhesion properties may be uneven.

It is also proposed that a single layer film containing two materials, a linear low-density polyethylene and another low-density polyethylene, should be used in which the linear low-density polyethylene is used to improve the adhesive strength (see for example Patent Literature 3). However, this pressure-sensitive adhesive sheet has pressure-sensitive adhesive layer made by a polyethylene which is relatively hard and sometimes has poor adhesion to rough surfaces.

It is also proposed that one side of the substrate should typically be made smooth so that adherability or adhesion can be improved (see for example Patent Literature 4). In the proposed pressure-sensitive adhesive sheet, however, the pressure-sensitive adhesive layer uses a low-density polyethylene and therefore is relatively hard and sometimes has poor adhesion to rough surfaces.

It is also proposed that one side of the substrate should be similarly made smooth so that adherability or adhesion can be improved (see for example Patent Literature 5). In the proposed pressure-sensitive adhesive sheet, however, the pressure-sensitive adhesive layer uses an ethylene-α-olefin copolymer resin and therefore is relatively hard and sometimes has poor adhesion to rough surfaces. The surface roughness is also defined in order to improve the adhesion. Under some molding conditions, however, the materials may form a rough appearance due to melt fracture so that a rough surface may be formed.

Patent Literature 1: Japanese Patent Application Laid-Open (JP-A) No. 61-103975
Patent Literature 2: JP-A No. 02-252777
Patent Literature 3: JP-A No. 60-243142
Patent Literature 4: Japanese Patent No. 3103190
Patent Literature 5: Japanese Patent No. 3116109

### DISCLOSURE OF INVENTION

### PROBLEMS TO BE SOLVED BY THE INVENTION

In view of the above circumstances, an object of the invention is to provide a surface protection sheet that includes a base material layer and a pressure-sensitive adhesive layer produced by co-extrusion, is highly capable of being unwound from a roll or the like, has a smooth pressure-sensitive adhesive layer and therefore has good adhesion to rough surfaces, and is free from the problem of transfer of the release component or staining property.

Another object of the invention is to provide a method for efficiently and inexpensively producing a surface protection sheet that includes a base material layer and a pressure-sensitive adhesive layer produced by co-extrusion, is highly capable of being unwound from a roll or the like, has a smooth pressure-sensitive adhesive layer and therefore has good adhesion to rough surfaces, and is free of the problem of release component transfer or staining property.

### MEANS FOR SOLVING THE PROBLEMS

In order to solve the aforementioned problem, the present inventors intensively studied and, as a result, found out that the object can be attained by the surface protection sheet shown below, which resulted in completion of the present invention.

That is, a surface protection sheet of the present invention is **characterized in that** the surface protection sheet, comprising a base material layer containing a thermoplastic resin, a pressure-sensitive adhesive layer provided on one side of the base material layer, and a backside treatment layer provided on another side of the base material layer and containing a polyethylene-based resin, wherein the base material layer, the pressure-sensitive adhesive layer and the backside treatment layer are integrally formed by co-extrusion, and the pressure-sensitive adhesive layer contains 50% by weight or more of an amorphous polyolefin-based elastomer.

In addition, a method for producing a surface protection sheet of the present invention is **characterized in that** the method comprising a base material layer containing a thermoplastic resin, a pressure-sensitive adhesive layer provided on one side of the base material layer, and a backside treatment layer provided on another side of the base material layer and containing a polyethylene-based resin, comprising the step of integrally forming the base material layer, the pressure-sensitive adhesive layer and the backside treatment layer by co-extrusion, wherein the pressure-sensitive adhesive layer contains 50% by weight or more of an amorphous polyolefin-based elastomer.

The present invention is preferable that the amorphous polyolefin-based elastomer is a polypropylene-based resin.

In addition, the present invention is preferable that the pressure-sensitive adhesive layer has a surface roughness Rz of 0.1 µm to 2 µm.

In addition, the present invention is preferable that the pressure-sensitive adhesive layer has a shear stress of 1 kPa to 100 kPa during the co-extrusion.

In addition, the present invention is preferable that the pressure-sensitive adhesive layer has a shear rate of 1 (1/s) to 40 (1/s) during the co-extrusion.

According to the invention, the surface protection sheet having a pressure-sensitive adhesive layer containing 50% by weight or more of the amorphous polyolefin elastomer is highly capable of being unwound from a roll or the like, has a smooth pressure-sensitive adhesive layer and therefore has good adhesion to rough surfaces, and is free from the problem of transfer of the release component or staining property. In particular, the surface protection sheet having the specific surface roughness Rz and having a shear stress in the specific range has a higher level of adhesive strength to rough surface adherends, exhibits good sealability, and uniformly adheres to an adherend, so that even when a transfer occurs from the surface of the pressure-sensitive adhesive, the transferred component can uniformly exist to have little effect on the adherend.

### BRIEF DESCRIPTION OF THE DRAWINGS

Fig. 1 is a micrograph of a surface protection sheet bonded to an acrylic plate in an example (at a magnification of 100);
Fig. 2 is a micrograph of a surface protection sheet bonded to an acrylic plate in an example (at a magnification of 100);
Fig. 3 is a micrograph of a surface protection sheet bonded to an acrylic plate in an example (at a magnification of 100);
Fig. 4 is a micrograph of a surface protection sheet bonded to an acrylic plate in an example (at a magnification of 100);

### DESCRIPTION OF THE PREFERRED EMBODIMENT

Embodiments of the present invention will be explained in detail below.

A surface protection sheet of the present invention is **characterized in that** the surface protection sheet, comprising a base material layer containing a thermoplastic resin, a pressure-sensitive adhesive layer provided on one side of the base material layer, and a backside treatment layer provided on another side of the base material layer and containing a polyethylene-based resin, wherein the base material layer, the pressure-sensitive adhesive layer and the backside treatment layer are integrally formed by co-extrusion, and the pressure-sensitive adhesive layer contains 50% by weight or more of an amorphous polyolefin-based elastomer.

The surface protection sheet of the invention may be produced by co-extrusion and lamination of the base material layer, the backside treatment layer and the pressure-sensitive adhesive layer.

Any co-extrusion method that has generally been used to produce films, sheets and so on may be used. For example, inflation method, co-extrusion T-die method, or the like may be used to form a three-layer structure or a four- or multi-layer structure. These co-extrusion methods are preferably used in view of cost or productivity.

The number of laminated layers in each layer is not particularly limited. Each of the base material layer, the backside treatment layer and the pressure-sensitive adhesive layer may be a single layer or if necessary a multilayer structure.

The base material layer of the surface protection sheet of the invention is preferably made of a polyolefin-based resin having heat resistance, solvent resistance and flexibility, while it may be made of any material containing a thermoplastic resin capable of being formed into a sheet or a film or made of such a thermoplastic resin. When the base material layer has flexibility, it may be wound into a roll, which makes it possible to perform various processes more easily as needed.

Examples of the polyolefin resin include polyethylene-based resins, propylene-based resins composed of propylene components or propylene components and ethylene components, and copolymers of ethylene and a polar monomer.

More specifically, examples of the polyolefin-based resin include, but are not limited to, low-density polyethylene, linear low-density polyethylene, polypropylene, poly-1-butene, poly-4-methyl-1-pentene, ethylene-propylene copolymers, ethylene-1-butene copolymers, ethylene-1-hexen copolymers, ethylene-4-methyl-1-pentene copolymers, ethylene-1-octene copolymers, ethylene-methyl acrylate copolymers, ethylene-methyl methacrylate copolymers, ethylene-vinyl acetate copolymers, ethylene-ethyl acrylate copolymers, and ethylene-vinyl alcohol copolymers.

The base material layer may be used in the form of a single layer or a two-layer or multilayer structure. Particularly when the base material layer is a two-layer or multilayer structure, each pair of adjacent layers may be made of any materials that can be strongly bonded together by melt co-extrusion.

In an embodiment of the invention, the base material layer may also contain various known additives that have generally been used for base materials for this type of tapes or sheets, as needed. Examples of such additives include various types of fillers, pigments, ultraviolet-absorbing agents, antioxidants, heat-resistant stabilizers, and lubricants.

The thickness of the base material layer is generally from about 20 to about 300 µm, preferably about 20 to about 250 µm, more preferably from about 40 to about 200 µm. When the base material layer is less than 20 µm in thickness, it may break or rupture during peeling. When the base material layer is more than 300 µm, it may be so stiff that partial peeling off or the like may easily occur after sticking.

In the surface protection sheet of the invention, the backside treatment layer is formed on one side of the base material layer. When the surface protection sheet of the invention is wound into a roll, the backside treatment layer is brought into contact with the pressure-sensitive adhesive layer, and when the sheet is unwound, the backside treatment layer can be easily peeled from the pressure-sensitive adhesive layer by a moderate unwinding force and functions to maintain good unwinding capability.

The backside treatment layer of the surface protection sheet of the invention is preferably made of a polyethylene-based resin having heat resistance, solvent resistance and flexibility, while it may be made of any material containing a polyethylene-based resin capable of being formed into a sheet or a film or made of such a polyethylene-based resin. When the backside treatment layer has flexibility, it may be wound into a roll, which makes it possible to perform various processes more easily as needed.

The polyethylene-based resin for use in the backside treatment layer may be of any type, and a single type or two or more types of polyethylene-based resins may be used alone or in combination.

Examples of the polyethylene-based resin include, but are not limited to, low-density polyethylene, linear low-density polyethylene, medium-density polyethylene, ethylene-propylene copolymers, ethylene-1-butene copolymers, ethylene-1-hexene copolymers, ethylene-4-methyl-1-pentene copolymers, ethylene-1-octene copolymers, ethylene-methyl acrylate copolymers, ethylene-methyl methacrylate copolymers, and copolymers of ethylene and any other monomer. One or more of these polyethylene resins may be used alone or in any combination.

In order to obtain good peeling property, various release additives may be added to the backside treatment layer. Examples of such additives include ethylene-vinyl alcohol copolymers, fatty acid amide-based additives, low-molecular-weight polyolefin waxes, and long-chain alkyl-based additives. Any one that has good miscibility with the backside treatment layer may be selected from these additives and used as needed.

When an ethylene-vinyl alcohol copolymer is used, for example, it may be produced by saponifying a copolymer of ethylene and vinyl acetate, vinyl formate, vinyl propionate, or vinyl acetate. The degree of saponification may be 50% or more, preferably 70% or more, more preferably 90% or more. In order to develop good peeling property, the ethylene content is preferably from 20 to 90% by mole, more preferably from 25 to 80% by mole, particularly preferably from 30 to 50% by mole.

Examples of the fatty acid amide-based additives include saturated fatty acid bisamides, unsaturated fatty acid bisamides, aromatic bisamides, and substituted ureas.

More specifically, examples of the fatty acid amide-based additives include methylenebisstearic acid amide, ethylenebisstearic acid amide, ethylenebisoleic acid amide, N,N-dioleoyladipic acid amide, and N-stearyl-N'-stearic acid amide such as N-stearyl-N'-stearylurea. One or more of these fatty acid amide-based additives may be used alone or in any combination.

Examples of the low-molecular-weight polyolefin waxes that may be used as needed include polyethylene waxes and polypropylene waxes.

Examples of the long-chain alkyl-based additives that may be used as needed include alkyl chain-containing low-molecular weight additives such as Peeloil 1010 and Peeloil 1010S (all manufactured by Ipposha Oil Industries Co., Ltd.). Any of the above release additives may be timely added in such an amount as to develop the desired peeling property.

The thickness of the backside treatment layer is preferably, but not limited to, from 1 to 20 µm, more preferably 2 to 18 µm, particularly preferably from 3 to 15 µm. When the backside treatment layer has a thickness of 1 µm or more, uneven thickness can be prevented during co-extrusion so that blocking can be prevented even in an environment where the effectively-placed backside treatment layer is heated or pressurized. When the backside treatment layer has a thickness of more than 20 µm, release failure may tend to be caused by staining or transfer of the additive, because of a large total amount of the additive. The backside treatment layer may be a single layer or a two- or multi-layer structure.

The backside treatment layer used for the surface protection sheet of the invention may also contain various known conventional additives, as needed. Examples of such additives include antioxidants, ultraviolet-absorbing agents, anti-aging agents, light stabilizers such as hindered amine light stabilizers, antistatic agents, surface lubricants, leveling agents, plasticizers, low-molecular-weight polymers, corrosion inhibitors, polymerization inhibitors, silane coupling agents, inorganic or organic fillers (such as calcium oxide, magnesium oxide, silica, zinc oxide, and titanium oxide), powders, particles or flakes of metals, colorants, pigments or the like, heat-resistant stabilizers, pigments, agents for preventing the formation of eye discharge-like residues, lubricants, and anti-blocking agents.

In an embodiment of the invention, the pressure-sensitive adhesive layer formed on one side of the base material layer includes an amorphous polyolefin-based elastomer, which is a thermoplastic resin used as a base polymer in the pressure-sensitive adhesive layer.

In an embodiment of the invention, the pressure-sensitive adhesive layer is characterized by including 50% by weight or more of the amorphous polyolefin-based elastomer. The pressure-sensitive adhesive layer preferably includes 60% by weight or more, more preferably 70% by weight or more of the amorphous polyolefin-based elastomer.

The amorphous polyolefin-based elastomer may be an ethylene-propylene rubber, an elastomer containing ethylene and an α-olefin, or any appropriate adhesive polypropylene-based resin such as an atactic polypropylene or any other amorphous polypropylene.

In an embodiment of the invention, the amorphous polyolefin-based elastomer has no crystalline structure, which may be checked by a method of testing solubility in n-heptane. Specifically, the amorphous polyolefin-based elastomer is added to n-heptane at a concentration of 10 wt%, and its solubility is determined. In this method, when it is substantially completely dissolved, the solubility is defined as 100%. Materials of which the solubility is 90% or more may be determined as amorphous materials.

For example, the polypropylene-based resin includes a propylene-α-olefin copolymer or a propylene-ethylene-α-olefin copolymer.

Examples of the α-olefin include 1-butene, 1-pentene, 1-hexene, 1-heptene, 1-octene, 4-methyl-1-pentene, and 4-methyl-1-hexene. In particular, 1-butene, 1-hexene, 1-octene, and 4-methyl-1-pentene are preferred. One or more α-olefins may be used alone or in combination.

The polypropylene-based resin may be used as needed, as long as it has rubber elasticity in the operating temperature range, and its hardness may be selected according to the desired adhesion properties. These resins may be used singly, or a mixture of two or more resins different in hardness may be used.

According to the intended use, various known conventional additives for control of the adhesion properties or for other purposes may also be added to the pressure-sensitive adhesive layer used for the surface protection sheet of the invention. Examples of such additives include various known conventional softeners, tackifiers, olefin-based resins such as those used for the base material layer, silicone-based polymers, liquid acrylic copolymers, phosphoric ester-based compounds, anti-aging agents, hindered amine light stabilizers, ultraviolet absorbing agents, surface lubricants, leveling agents, plasticizers, low-molecular-weight polymers, antioxidants, corrosion inhibitors, polymerization inhibitors, silane coupling agents, inorganic or organic fillers (such as calcium oxide, magnesium oxide, silica, zinc oxide, and titanium oxide), powders, particles or flakes of metals, colorants pigments or the like, and heat-resistant stabilizers.

In an embodiment of the invention, the addition of the softener is generally effective in improving the adhesive strength.

Examples of the softener include low-molecular-weight polyisobutylenes, polybutenes, polyisoprenes, polybutadienes, hydrogenated polyisoprenes, hydrogenated polybutadienes, and derivatives thereof having a reactive group or groups such as OH group, COOH group or epoxy group at one or both ends, ethylene-propylene rubbers, castor oil, linseed oil, soybean oil, process oil, naphthenic oil, phthalic or phosphoric ester-based plasticizers, and liquid aliphatic petroleum resins.

More specifically, examples of the derivatives include hydrogenated polybutadiene diol, hydrogenated polybutadiene monool, hydrogenated polyisoprene diol, and hydrogenated polyisoprene monool. In particular, hydrogenation products of diene-based polymers, such as hydrogenated polybutadiene and hydrogenated polyisoprene, and olefin-based softeners are preferred in order to control an increase in the adhesion to adherends.

The number average molecular weight of the softener is preferably from about 5,000 to about 100,000, particularly preferably from 10,000 to 50,000, while it may be set to any appropriate value as needed. A relatively low molecular weight may cause material transport from the pressure-sensitive adhesive layer to adherends or heavy load in peeling. On the other hand, as the molecular weight increases, the adhesive strength-increasing effect may tend to be low.

The softeners may be used alone, or a mixture of two or more of the softeners may be used. Based on 100 parts by weight of a pressure-sensitive adhesive composition containing the thermoplastic pressure-sensitive adhesive resin and the softener, the amount of the softener may be, but not limited to, 60 parts by weight or less, preferably 50 parts by weight or less, particularly preferably 30 parts by weight or less. When the amount is more than 60 parts by weight, the adhesive residue may tend to be increased by exposure to high temperature or outdoor environment. The effect of the addition of less than 5 parts by weight of the softener may be insufficient.

In an embodiment of the invention, the addition of a tackifier is generally effective in improving the adhesive strength of the pressure-sensitive adhesive layer.

For example, the tackifier to be used may be one or more appropriately selected from known tackifiers that have been used for pressure-sensitive adhesive compositions, such as petroleum-based resins such as aliphatic copolymers, aromatic copolymers, aliphatic-aromatic copolymers, and alicyclic copolymers, coumarone-indene-based resins, terpene-based resins, terpene-phenol-based resins, alkyl phenol-based resins, rosin-based resins such as polymerized rosin-based resins, xylene-based resins, and hydrides thereof. Commercially available blends with olefin resins may also be used. In view of peeling property or weather resistance, hydrogenated tackifiers are particularly preferred.

When the tackifier is used, the amount of the tackifier may be, but not limited to, 80 parts by weight or less, preferably 60 parts by weight or less, particularly preferably 50 parts by weight or less, based on 100 parts by weight of the thermoplastic pressure-sensitive adhesive resin, so that the adhesive strength can be increased while the problem of adhesive residue resulting from a reduction in cohesive strength can be avoided. When the amount is more than 100 parts by weight, adhesive residue may become pronounced upon exposure to high temperature or outdoor environment.

In an embodiment of the invention, the pressure-sensitive adhesive layer preferably has a surface roughness Rz of 0.1 to 2 µm, more preferably 0.1 to 1.5 µm, even more preferably 0.1 to 1.2 µm.

Shear stress may be used as an index of a preferred state of polymer molding. A specific method for measuring the shear stress is described in the section "EXAMPLES". The shear stress is applied to the wall surface of an extruder, when the resin is subjected to extrusion or the like, in which the shear stress may be used as an index of the stability of the appearance of the melted polymer. When the shear stress value is relatively high, the melted polymer may significantly fluctuate in pressure during extrusion or undergo a phenomenon in which its surface is unevenly roughened during extrusion, so that the surface smoothness of the product may be reduced.

In an embodiment of the invention, the pressure-sensitive adhesive layer containing the amorphous polyolefin-based elastomer preferably has a shear stress of 1 kPa to 100 kPa, more preferably 20 kPa to 70 kPa, during molding. When molding is performed in the above range, a smooth appearance can be kept during extrusion molding, so that the resulting pressure-sensitive adhesive layer can have improved adhesion to rough surfaces. When the shear stress exceeds 100 kPa, the stress between the melted polymer and the wall surface of the extruder can be so high that the discharged resin may fluctuate in thickness or pulsate to form a significantly rough surface when the stress is released in the normal direction from an end portion (such as a discharge die) of the extruder.

For example, the shear stress may be controlled by controlling the molecular structure of the resin to be used or the mixing ratio between the resin and various additives.

The shear stress may be controlled by also the molding conditions, because the shear stress is a function of shear rate. For example, the shear stress may be controlled by controlling the amount of the discharge of the resin, the molding temperature, the gap of the sheet molding die, or the like.

When the shear stress is set in the range of 1 to 100 kPa, extrusion is preferably performed under such conditions that the pressure-sensitive adhesive layer has a shear rate of 1 to 40 (1/s) in the sheet molding part (such as a T die or a ring die for inflation) of a melt extruder. When the shear rate is higher than that, the sheet molding speed may be substantially high so that it may be difficult to feed the sheet.

In the surface protection sheet of the invention, the thickness of the pressure-sensitive adhesive layer is generally from about 1 to about 50 µm, preferably from 2 to 40 µm, more preferably from 5 to 20 µm.

The entire thickness of the surface protection sheet of the invention is generally from 25 to 300 µm, preferably from 30 to 200 µm, more preferably from 40 to 150 µm, particularly preferably from 40 to 130 µm.

The surface of the pressure-sensitive adhesive layer may also be subjected to surface treatment for adhesion control, sticking workability or the like, such as corona discharge treatment, ultraviolet radiation treatment, flame treatment, plasma treatment, or sputter etching treatment.

If necessary, a separator or the like may be transiently bonded to the pressure-sensitive adhesive layer to protect it until actual use.

In order to have the capability of being cut by hand or to have anti-slip properties, the backside treatment layer side of the surface protection sheet may also be subjected to an embossing process, a convexconcave process, or the like, as needed.

In an embodiment of the invention, a method for producing the surface protection sheet may include heating row materials for the base material layer, for the backside treatment layer to be formed on one side of the base material layer and for the pressure-sensitive adhesive layer to be made of a thermoplastic resin to melt them and co-extruding the melts to form the backside treatment layer integrally on one side of the base material layer and to form the pressure-sensitive adhesive layer integrally on the other side of the base material layer so that a three-layer structure tape (or a tape of a four- or multi-layer structure (including the three-layer structure)) having a predetermined thickness is produced. This method is preferred, because the surface protection sheet of the invention can be produced at high efficiency and low cost by this method.

When the method of the invention is used to produce the surface protection sheet, the backside treatment layer and the pressure-sensitive adhesive layer are prevented from coming into contact with each other in a heated and melted state. Therefore, production of by-products and migration of by-products to the pressure-sensitive adhesive layer are prevented, which would otherwise be caused by thermal degradation of the backside treatment layer. This makes it possible to produce a surface protection sheet that exhibits a good unwinding capability, is prevented from staining of the pressure-sensitive adhesive layer surface, and has high adhesive strength.

### EXAMPLES

The features and effects of the invention are more specifically described by the examples and so on below.

### Example 1

A backside treatment layer-forming material containing a low-density polyethylene (LC680, manufactured by Japan Polyethylene Corporation, 10 in MFR, 0.936 g/cm³ in density), an ethylene-vinyl acetate copolymer (LV430, manufactured by Japan Polyethylene Corporation, 1 in MFR, 15% in VA content) and a long-chain alkyl additive (Peeloil 1010S manufactured by Ipposha Oil Industries Co., Ltd.) in a weight ratio of 89.5:5.5:5; a base material layer-forming material of a low-density polyethylene (Petrothene OM05B, manufactured by TOSOH Corporation, 2.0 in MFR, 0.924 g/cm³ in density); and a pressure-sensitive adhesive layer-forming material of a polypropylene elastomer (Tafcelene H5002, manufactured by Sumitomo Chemical Co., Ltd., 10 in MFR, 0.860 g/cm³ in density) were coextruded into a film by an inflation method at a die temperature of 180°C, so that a surface protection sheet composed of a 5 µm-thick backside treatment layer, a 50 µm-thick base material layer, and a 7 µm-thick pressure-sensitive adhesive layer was obtained. Under the film production conditions, the pressure-sensitive adhesive layer had a shear rate of 27.0 (1/s) and a shear stress of 50 (kPa).

### Example 2

A backside treatment layer-forming material containing a low-density polyethylene (LC680, manufactured by Japan Polyethylene Corporation, 10 in MFR, 0.936 g/cm³ in density), an ethylene-vinyl acetate copolymer (LV430, manufactured by Japan Polyethylene Corporation, 1 in MFR, 15% in VA content) and a long-chain alkyl additive (Peeloil 1010S manufactured by Ipposha Oil Industries Co., Ltd.) in a weight ratio of 89.5:5.5:5; a base material layer-forming material of a low-density polyethylene (Petrothene OM05B, manufactured by TOSOH Corporation, 2.0 in MFR, 0.924 g/cm³ in density); and a pressure-sensitive adhesive layer-forming material of a polypropylene elastomer (Tafcelene H5002, manufactured by Sumitomo Chemical Co., Ltd., 10 in MFR, 0.860 g/cm³ in density) were coextruded into a film by an inflation method at a die temperature of 180°C, so that a surface protection sheet composed of a 5 µm-thick backside treatment layer, a 50 µm-thick base material layer, and a 7 µm-thick pressure-sensitive adhesive layer was obtained. Under the film production conditions, the pressure-sensitive adhesive layer had a shear rate of 9.4 (1/s) and a shear stress of 39 (kPa).

### Comparative Example 1

A backside treatment layer-forming material containing a low-density polyethylene (LC680, manufactured by Japan Polyethylene Corporation, 10 in MFR, 0.936 g/cm³ in density), an ethylene-vinyl acetate copolymer (LV430, manufactured by Japan Polyethylene Corporation, 1 in MFR, 15% in VA content) and a long-chain alkyl additive (Peeloil 1010S manufactured by Ipposha Oil Industries Co., Ltd.) in a weight ratio of 89.5:5.5:5; a base material layer-forming material of a low-density polyethylene (Petrothene 0M05B, manufactured by TOSOH Corporation, 2.0 in MFR, 0.924 g/cm³ in density); and a pressure-sensitive adhesive layer-forming material of a polypropylene elastomer (Tafcelene H3002, manufactured by Sumitomo Chemical Co., Ltd., 3 in MFR, 0.860 g/cm³ in density) were coextruded into a film by an inflation method at a die temperature of 180°C, so that a surface protection sheet composed of a 5 µm-thick backside treatment layer, a 50 µm-thick base material layer, and a 7 µm-thick pressure-sensitive adhesive layer was obtained. Under the film production conditions, the pressure-sensitive adhesive layer had a shear rate of 51 (1/s) and a shear stress of 171 (kPa).

### Comparative Example 2

A backside treatment layer-forming material containing a low-density polyethylene (LC680, manufactured by Japan Polyethylene Corporation, 10 in MFR, 0.936 g/cm³ in density), an ethylene-vinyl acetate copolymer (LV430, manufactured by Japan Polyethylene Corporation, 1 in MFR, 15% in VA content) and a long-chain alkyl additive (Peeloil 1010S manufactured by Ipposha Oil Industries Co., Ltd.) in a weight ratio of 89.5:5.5:5; a base material layer-forming material of a low-density polyethylene (Petrothene 0M05B, manufactured by TOSOH Corporation, 2.0 in MFR, 0.924 g/cm³ in density); and a pressure-sensitive adhesive layer-forming material of a polypropylene elastomer (Tafcelene H3002, manufactured by Sumitomo Chemical Co., Ltd., 3 in MFR, 0.860 g/cm³ in density) were coextruded into a film by an inflation method at a die temperature of 180°C, so that a surface protection sheet composed of a 5 µm-thick backside treatment layer, a 50 µm-thick base material layer, and a 7 µm-thick pressure-sensitive adhesive layer was obtained. Under the film production conditions, the pressure-sensitive adhesive layer had a shear rate of 52 (1/s) and a shear stress of 174 (kPa).

The pressure-sensitive adhesive sheet obtained in each of the examples and the comparative examples was evaluated for shear rate, shear stress, adhesion, and surface roughness Rz in the manner described below.

### Shear Rate and Shear Stress

The shear stress of the resin was measured using a twin capillary extensional rheometer RH7-2 manufactured by Rosand Precision with a measurement capillary diameter of 2 mm at each shear rate, while the resin was pressed out at a resin temperature of 180°C. Bagley correction and Rabinowitsch correction were performed on the measured value.

The shear rate of the coextruded material was calculated using the quantities in the film production process according to the double circular tube shear rate equation.

Based on the shear rate calculated from the discharge quantity, the shear stress was also calculated according to a relational expression between the shear stress measured with the capillary extensional rheometer and the shear viscosity.

### Adhesion

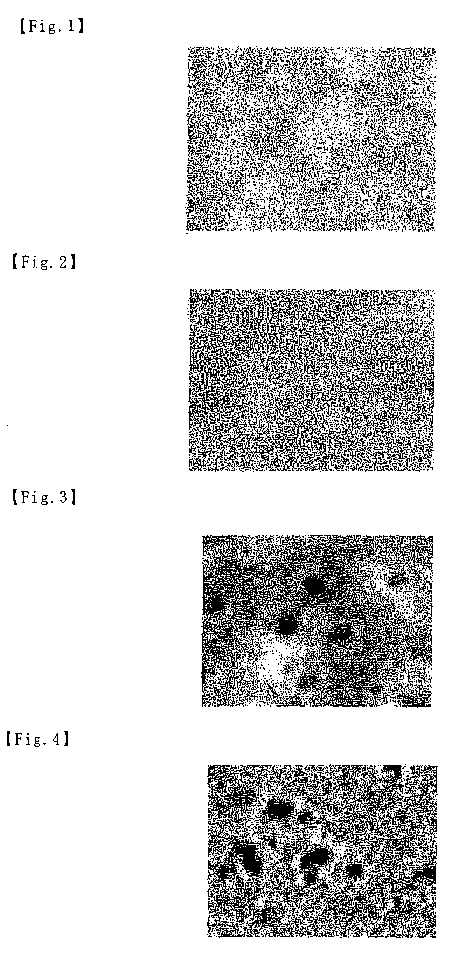

The pressure-sensitive adhesive layer of the surface protection sheet was bonded to an acrylic plate (2 mm in thickness) using a rubber roll under a load of 3 kg. Whether air bubbles were trapped between the bonded acrylic plate and sheet was observed using a microscope at a magnification of 100x. The case that air bubbles were found was expressed by the mark "×", while the case that no air bubble was found was expressed by the mark "O". The resulting images are shown in Figs. 1 to 4, in which black portions correspond to air bubbles. The lateral size of each figure is 65 µm.

### Surface Roughness Rz

The ten-point average peak-to-valley roughness Rz was measured using a stylus surface profilometer P-15 (manufactured by KLA-Tencor Corporation) with a measuring length of 1 mm at a measuring speed of 100 µm/second. Noise was removed from the measurement at a cut-off of 2.5 mm.

The results are shown in Table 1.

**Table 1**

| | Surface roughness | Air bubbles |
|---|---|---|
| | [µm] | [-] |
| Example 1 | 0.39 | O |
| Example 2 | 0.56 | O |
| Comparative Example 1 | 2.54 | × |
| Comparative Example 2 | 3.66 | × |

The results of Table 1 and Figs. 1 to 4 show that a good appearance and good adhesion are obtained in all the examples where surface protection sheets prepared according to the invention are used (Examples 1 and 2).

## Claims

1. A surface protection sheet, comprising a base material layer containing a thermoplastic resin, a pressure-sensitive adhesive layer provided on one side of the base material layer, and a backside treatment layer provided on another side of the base material layer and containing a polyethylene-based resin, wherein
the base material layer, the pressure-sensitive adhesive layer and the backside treatment layer are integrally formed by co-extrusion, and
the pressure-sensitive adhesive layer contains 50% by weight or more of an amorphous polyolefin-based elastomer.

2. The surface protection sheet of claim 1, wherein the amorphous polyolefin-based elastomer is a polypropylene-based resin.

3. The surface protection sheet of claim 1 or 2, wherein the pressure-sensitive adhesive layer has a surface roughness Rz of 0.1 µm to 2 µm.

4. A method for producing a surface protection sheet comprising a base material layer containing a thermoplastic resin, a pressure-sensitive adhesive layer provided on one side of the base material layer, and a backside treatment and containing a polyethylene-based resin, comprising the step of integrally forming the base material layer, the pressure-sensitive adhesive layer and the backside treatment layer by co-extrusion, wherein
the pressure-sensitive adhesive layer contains 50% by weight or more of an amorphous polyolefin-based elastomer.

5. The method for producing a surface protection sheet of claim 4, wherein the amorphous polyolefin-based elastomer is a polypropylene-based resin.

6. The method for producing a surface protection sheet of claim 4 or 5, wherein the pressure-sensitive adhesive layer has a surface roughness Rz of 0.1 µm to 2 µm.

7. The method for producing a surface protection sheet of any one of claims 4 to 6, wherein the pressure-sensitive adhesive layer has a shear stress of 1 kPa to 100 kPa during the co-extrusion.

8. The method for producing a surface protection sheet of any one of claims 4 to 7, wherein the pressure-sensitive adhesive layer has a shear rate of 1 (1/s) to 40 (1/s) during the co-extrusion.
